(19) Europäisches Patentamt
European Patent Office
Office européen des brevets

(11)     **EP 4 506 400 B1**

(12)                           **EUROPEAN PATENT SPECIFICATION**

(45) Date of publication and mention
of the grant of the patent:
**25.02.2026  Bulletin 2026/09**

(21) Application number: **23815837.2**

(22) Date of filing: **19.05.2023**

(51) International Patent Classification (IPC):
**C08J 9/18** (2006.01)      **C08J 9/14** (2006.01)

(52) Cooperative Patent Classification (CPC):
**C08J 9/18; C08J 9/144;** C08J 2203/162;
C08J 2323/06; C08J 2323/12; C08J 2323/14;
C08J 2323/16

(86) International application number:
**PCT/JP2023/018806**

(87) International publication number:
**WO 2023/234078 (07.12.2023 Gazette 2023/49)**

(54) **POLYOLEFIN RESIN FOAM PARTICLES AND METHOD FOR MANUFACTURING SAME**

POLYOLEFINHARZSCHAUMPARTIKEL UND VERFAHREN ZUR HERSTELLUNG DAVON

PARTICULES DE MOUSSE DE RÉSINE DE POLYOLÉFINE ET LEUR PROCÉDÉ DE FABRICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **01.06.2022  JP 2022089827**

(43) Date of publication of application:
**12.02.2025  Bulletin 2025/07**

(73) Proprietor: **JSP Corporation
Tokyo 100-0005 (JP)**

(72) Inventor: **NOHARA Tokunobu
Yokkaichi-shi, Mie 510-0881 (JP)**

(74) Representative: **Kramer Barske Schmidtchen
Patentanwälte PartG mbB
European Patent Attorneys
Landsberger Strasse 300
80687 München (DE)**

(56) References cited:
**WO-A1-2009/054212      WO-A1-2013/031745
WO-A1-2020/132319      JP-A- 2012 224 786
JP-A- 2012 516 381      JP-A- 2014 001 334
JP-A- 2018 053 232      JP-A- 2022 042 647
JP-A- 2022 514 907      US-A1- 2002 143 076
US-A1- 2011 288 192      US-A1- 2017 275 434**

## Description

### TECHNICAL FIELD

The present invention relates to polyolefin-based resin expanded beads and method for producing the same.

### BACKGROUND ART

A molded article of polyolefin-based resin expanded beads obtained by in-mold molding of polyolefin-based resin expanded beads is used for various applications such as packaging materials, automobile members, and building materials. The molded article of polyolefin-based resin expanded beads is produced by a method called an in-mold molding method in which polyolefin-based resin expanded beads are filled in a mold, and then a heating medium such as steam is supplied into the mold to heat the beads. In the in-mold molding method, when the heating medium is supplied into the mold, the expanded beads are secondarily expanded, and the surfaces thereof are melted. As a result, the expanded beads in the mold are mutually fusion-bonded, and a molded article having a shape corresponding to the shape of the cavity of the mold can be obtained.

Polyolefin-based resin expanded beads are produced, for example, by impregnating polyolefin-based resin particles dispersed in an aqueous medium with a physical blowing agent in a sealed container, and then releasing the polyolefin-based resin particles impregnated with the physical blowing agent together with the aqueous medium under an environment of a pressure lower than that in the sealed container. Such an expanding method is sometimes referred to as a "direct expanding method".

As the physical blowing agent used in the direct expanding method, an inorganic physical blowing agent such as water, carbon dioxide, nitrogen, and air (that is, a mixture of oxygen, nitrogen, and carbon dioxide) is used from the viewpoint of environmental load and safety. Patent Literature 1 discloses that carbon dioxide is preferable among these inorganic physical blowing agents. Patent Literature 2-5 disclose methods for producing polyolefin-based expanded beads using carbon dioxide, butane, nitrogen or isobutane as a blowing agent.

### PRIOR ART LITERATURE

Patent Literature

Patent Literature 1: WO-A-2019/172204
Patent Literature 2: US2017/275434 A1
Patent Literature 3: WO2013/031745 A1
Patent Literature 4: WO2009/054212 A1
Patent Literature 5: US2002/143076 A1

### SUMMARY OF INVENTION

### PROBLEMS TO BE SOLVED BY INVENTION

When producing polyolefin-based resin expanded beads having a small apparent density by the direct expanding method using carbon dioxide as the physical blowing agent, there is a problem in that the resulting polyolefin-based resin expanded beads tend to shrink. When the shrunken expanded beads are molded by in-mold molding, it is difficult to produce a molded article of expanded beads having a low apparent density, and there is also a problem in that production management becomes difficult. Therefore, for example, a step of recovering the shrunk state by applying air into the expanded beads is required, and there is room for improvement in productivity.

In order to avoid these problems, in the case of producing polyolefin-based resin expanded beads having a low apparent density, a method called a two-step expanding method, in which resin particles are expanded in two steps, has been conventionally adopted. In the two-step expanding method, first, expanded beads (that is, first-step expanded beads) having an apparent density higher than a desired apparent density are prepared by the direct expanding method. Next, the pressure in the cells of the first-step expanded beads is increased, then the first-step expanded beads are heated to thereby further expand the first-step expanded beads to produce polyolefin-based resin expanded beads having a desired apparent density. However, the polyolefin-based resin expanded beads obtained by the two-step expanding method may be difficult to provide a good molded article of expanded beads depending on molding conditions during in-mold molding. In addition, the polyolefin-based resin expanded beads obtained by the two-step expanding method tend to have large variations in particle diameter, and thus may not satisfy required performance depending on the application of the molded article of expanded beads.

The present invention has been made in view of such a background, and an object of the present invention is to provide polyolefin-based resin expanded beads that are less likely to shrink even when the apparent density is low, have excellent moldability, and have small variations in particle diameter, and a method for producing the polyolefin-based resin expanded beads.

MEANS FOR SOLVING PROBLEM

A first aspect of the present invention is a method for producing polyolefin-based resin expanded beads according to the following [1] to [6].

[1] A method for producing polyolefin-based resin expanded beads, including:

a dispersing step of dispersing polyolefin-based resin particles in an aqueous medium;
a blowing agent adding step of adding a physical blowing agent into a sealed container; and
an expanding step of expanding the polyolefin-based resin particles by impregnating the polyolefin-based resin particles with the physical blowing agent in the sealed container, then releasing the polyolefin-based resin particles from the sealed container together with the aqueous medium to thereby produce polyolefin-based resin expanded beads having an apparent density of 10 kg/m$^3$ or more and 80 kg/m$^3$ or less,
wherein the physical blowing agent contains hydrofluoroolefin, and
an addition amount of the hydrofluoroolefin in the blowing agent adding step is 10 parts by mass or more and 30 parts by mass or less with respect to 100 parts by mass of the polyolefin-based resin particles.

[2] The method for producing polyolefin-based resin expanded beads according to [1], wherein the hydrofluoroolefin has a carbon skeleton a carbon number of which is three or more and five or less.
[3] The method for producing polyolefin-based resin expanded beads according to [1] or [2], wherein the hydrofluoroolefin contains a chlorine atom(s) in a molecular structure thereof.
[4] The method for producing polyolefin-based resin expanded beads according to any one of [1] to [3], wherein the hydrofluoroolefin is one or more compounds selected from the group consisting of 1-chloro-3,3,3-trifluoropropene and 1-chloro-2,3,3,3-tetrafluoropropene.
[5] The method for producing polyolefin-based resin expanded beads according to any one of [1] to [4], wherein polyolefin-based resin expanded beads having an apparent density of 10 kg/m$^3$ or more and 50 kg/m$^3$ or less are produced.
[6] The method for producing polyolefin-based resin expanded beads according to any one of [1] to [5], wherein the polyolefin-based resin expanded beads have a shrinkage ratio of 5% or less.

A second aspect of the present invention is polyolefin-based resin expanded beads according to the following [7] to [11].

[7] Polyolefin-based resin expanded beads obtained by expanding polyolefin-based resin particles using a physical blowing agent,

wherein the physical blowing agent contains hydrofluoroolefin,
an apparent density of the polyolefin-based resin expanded beads is 10 kg/m$^3$ or more and 80 kg/m$^3$ or less, and
the polyolefin-based resin expanded beads have an average short diameter of 1.0 mm or more and 5.0 mm or less and a coefficient of variation of a short diameter of 10% or less.

[8] The polyolefin-based resin expanded beads according to [7], wherein an amount of the hydrofluoroolefin contained in each polyolefin-based resin expanded bead is 1 mass% or less (including 0 mass%).
[9] The polyolefin-based resin expanded beads according to [7] or [8], wherein the hydrofluoroolefin has a carbon skeleton a carbon number of which is three or more and five or less.
[10] The polyolefin-based resin expanded beads according to any one of [7] to [9], wherein the hydrofluoroolefin contains a chlorine atom(s) in a molecular structure thereof.
[11] The polyolefin-based resin expanded beads according to any one of [7] to [10], wherein the hydrofluoroolefin is one or more compounds selected from the group consisting of 1-chloro-3,3,3-trifluoropropene and 1-chloro-2,3,3,3-tetrafluoropropene.

EFFECTS OF INVENTION

The above aspects can provide polyolefin-based resin expanded beads that are less likely to contract even when the apparent density is low, have excellent moldability, and have small variations in particle diameter, and a method for producing the polyolefin-based resin expanded beads.

BRIEF DESCRIPTION OF DRAWINGS

Fig. 1 is an explanatory diagram showing a method for calculating the heat of a high temperature peak.
Fig. 2 is an explanatory diagram showing an example of a stress-strain curve of a molded article of expanded beads.

MODE FOR CARRYING OUT INVENTION

(Method for Producing Polyolefin-based resin expanded beads)

In a method for producing the polyolefin-based resin expanded beads (hereinafter referred to as "expanded beads"), the expanded beads can be obtained by expanding polyolefin-based resin particles (hereinafter referred to as "resin particles") by the direct expanding method using the specific physical blowing agent. Hereinafter, a more detailed configuration of the method for producing the polyolefin-based resin expanded beads will be described.

<Polyolefin-based resin particles>

The polyolefin-based resin particles for use in production of the expanded beads are resin particles in a non-foamed state and contain a polyolefin-based resin as a base resin. The polyolefin-based resin refers to a homopolymer of an olefin monomer and a copolymer containing 50 mol% or more of a component derived from an olefin monomer. Examples of the olefin monomer include ethylene, propylene, butene, and pentene.

More specifically, for example, a polyethylene-based resin, a polypropylene-based resin, polybutene, polypentene, or a copolymer of an olefin monomer and another monomer can be used as the polyolefin-based resin.

Examples of the polyethylene-based resin include polyethylenes such as high density polyethylene (PE-HD), medium density polyethylene (PE-MD), low density polyethylene (PE-LD), linear low density polyethylene (PE-LLD), and ultra low density polyethylene; and ethylene-based copolymers containing 50 mol% or more of a component derived from ethylene, such as an ethylene-vinyl acetate copolymer (EVA), an ethylene-ethyl acrylate copolymer (EEAK), and an ethylene-methyl methacrylate copolymer (EMMA). Among them, linear low density polyethylene is preferably used as the polyethylene-based resin from the viewpoint of expandability, moldability, and the like. The linear low density polyethylene is preferably a copolymer of ethylene and an $\alpha$-olefin having a carbon number of 4 to 8 and is polyethylene having a substantially linear molecular chain and a density of 910 kg/m$^3$ or more and less than 930 kg/m$^3$. The melting point of the polyethylene-based resin is preferably 110°C or higher and 130°C or lower.

Examples of the polypropylene-based resin include propylene homopolymers such as isotactic polypropylene, syndiotactic polypropylene, and atactic polypropylene; and propylene copolymers containing 50 mol% or more of a component derived from propylene, such as a propylene-ethylene copolymer, a propylene-butene copolymer, a propylene-ethylene-butene terpolymer, a propylene-hexene copolymer, a propylene-acrylic acid copolymer, and a propylene-maleic anhydride copolymer. These copolymers are, for example, random copolymers, block copolymers, and the like and are preferably random copolymers. The melting point of the polypropylene-based resin is preferably 130°C or higher and 160°C or lower, more preferably 135°C or higher and 155°C or lower.

From the viewpoint of expandability, moldability, and the like, and from the viewpoint of easily setting the cell diameter of the expanded beads to the range described later, it is preferable to use one or two or more propylene-based copolymers selected from a propylene-ethylene random copolymer, a propylene-butene random copolymer, and a propylene-ethylene-butene random copolymer as the polypropylene-based resin.

The resin particles may contain one resin selected from these polyolefin-based resins, and may contain two or more resins selected from these polyolefin-based resins.

The polyolefin-based resin constituting the resin particles is preferably a polypropylene-based resin. Polypropylene-based resin expanded beads obtained by expanding such resin particles are excellent in cushioning property, compression strain recoverability, and lightweight property. Therefore, by in-mold molding of the polypropylene-based resin expanded beads, a molded article of expanded beads suitable for applications such as packaging materials, automobile members, and building materials can be easily obtained.

In the case of using a polypropylene-based resin as the polyolefin-based resin constituting the resin particles is a polypropylene-based resin, the flexural modulus of the polypropylene-based resin is preferably 1500 MPa or less, more preferably 1200 MPa or less, still more preferably 1000 MPa or less from the viewpoint of further improving the moldability of the expanded beads. The lower limit of the flexural modulus of the polypropylene-based resin is not particularly limited but is about 800 MPa. The flexural modulus of the polypropylene-based resin can be determined in accordance with JIS K 7171:2008. As described later, according to the method for producing the expanded beads, shrinkage of the expanded beads immediately after production can be curtailed. In particular, shrinkage can be curtailed even in the case of producing expanded beads constituted of a polypropylene-based resin having a flexural modulus of 1200 MPa or less, which have a weak resistance to shrinkage and are more likely to shrink.

In addition to the polyolefin-based resin as the base resin, the resin particles may contain a polymer other than the polyolefin-based resin, such as another resin and an elastomer, as long as the object and the operation and effect of the present invention are not impaired. Examples of the resin other than the polyolefin-based resin include thermoplastic resins such as a polystyrene resin, a polyamide resin, and a polyester resin. Examples of the elastomer include thermoplastic elastomers such as olefinic thermoplastic elastomers and styrene-based thermoplastic elastomers. The proportion of the polymer other than the polyolefin-based resin in the resin particles is preferably 20 mass% or less, more preferably 10 mass% or less, still more preferably 5 mass% or less, particularly preferably 0 mass%, that is, the resin particles contain only the polyolefin-based resin as polymers.

In addition, the polyolefin-based resin that is the base resin of the resin particles may contain additives such as a cell adjusting agent, a crystal nucleating agent, a flame retardant, a flame retardant aid, a plasticizer, an antistatic agent, an antioxidant, an ultraviolet inhibitor, a light stabilizer, a conductive filler, an antibacterial agent, and a colorant as long as the above-described operation and effect are not impaired. The amount of the additives contained in the resin particles is preferably, for example, 0.01 parts by mass or more and 10 parts by mass or less with respect to 100 parts by mass of the polyolefin-based resin.

The method for producing the resin particles is not particularly limited, and various methods such as a strand cutting method, a hot cutting method, and an underwater cutting method can be adopted. For example, in the strand cutting method, the polyolefin-based resin to be the base resin and an additive such as a cell nucleating agent supplied as necessary are supplied into an extruder, heated, and kneaded to provide a resin melt-kneaded product. Thereafter, the resin melt-kneaded product is extruded from a small hole of a die attached to the tip of the extruder to form an extrudate. After the extrudate is cooled in water, the extrudate is cut to a desired length to provide resin particles containing the polyolefin-based resin as the base resin.

<Dispersing Step>

In a dispersing step, the polyolefin-based resin particles are dispersed in an aqueous medium to prepare a dispersion. The operation of dispersing the resin particles in the aqueous medium is preferably performed in a sealed container to be used in the blowing agent adding step and the expanding step from the viewpoint of productivity. However, it is also possible to perform the operation of dispersing the resin particles in the aqueous medium in a container different from the sealed container used in the blowing agent adding step and the expanding step. In this case, for example, it is sufficient to move the dispersion into the sealed container just before the blowing agent adding step is performed.

As the aqueous medium, a liquid containing water as a main component is used. In addition to water, the aqueous medium may contain a hydrophilic organic solvent such as ethylene glycol, glycerin, methanol, or ethanol. The proportion of water in the aqueous medium is preferably 60 mass% or more, more preferably 70 mass% or more, still more preferably 80 mass% or more.

A dispersant may be added to the aqueous medium. By adding the dispersant to the aqueous medium, fusion-bonding between the resin particles heated in the container can be avoided during the blowing agent adding step and the subsequent expanding step. The addition amount of the dispersant is preferably 0.001 parts by mass or more and 5 parts by mass or less with respect to 100 parts by mass of the resin particles. As the dispersant, an organic dispersant or an inorganic dispersant can be used, but it is preferable to use a particulate inorganic substance as the dispersant from the viewpoint of ease of handling. More specifically, as the dispersant, for example, clay minerals such as amsnite, kaolin, mica, and clay, aluminum oxide, titanium oxide, basic magnesium carbonate, basic zinc carbonate, calcium carbonate, iron oxide, or the like can be used. These dispersants may be used alone, or two or more kinds of dispersants may be used in combination. Among them, a clay mineral is preferably used as the dispersant. The clay mineral may be natural or synthetic.

In the case where the dispersant is added to the aqueous medium, an anionic surfactant such as sodium dodecylbenzenesulfonate, sodium alkylbenzenesulfonate, sodium lauryl sulfate, and sodium oleate is preferably used in combination as a dispersing aid. The addition amount of the dispersing aid is preferably 0.001 parts by mass or more and 1 part by mass or less with respect to 100 parts by mass of the resin particles.

<Blowing Agent Adding Step>

In the blowing agent adding step, a blowing agent containing hydrofluoroolefin is added into the sealed container. The timing of performing the blowing agent adding step is not particularly limited as long as it is before the expanding step. For example, the blowing agent adding step may be performed before the dispersing step is performed, or may be performed in parallel with the dispersing step. The blowing agent adding step may be performed after the dispersing step is completed. In any case, the polyolefin-based resin particles can be impregnated with the hydrofluoroolefin by bringing the polyolefin-based resin particles into contact with the hydrofluoroolefin in a sealed container.

The physical blowing agent used in the blowing agent adding step contains an hydrofluoroolefin. The addition amount of the hydrofluoroolefin in the blowing agent adding step is 10 parts by mass or more and 30 parts by mass or less with respect to 100 parts by mass of the polyolefin-based resin particles. In the blowing agent adding step, by impregnating the resin particles with the physical blowing agent containing the specific amount of the hydrofluoroolefin, even when expanded beads having a low apparent density have been produced in the expanding step, shrinkage of the expanded beads immediately after production can be curtailed.

In the past, in the case of producing polyolefin-based resin beads having a small apparent density by the direct expanding method with carbon dioxide as the physical blowing agent, there was a problem in that the resulting polyolefin-based resin expanded beads shrink easily. In particular, in the case of producing expanded beads having a lower apparent density such as 50 $kg/m^3$ or less, the resistance to shrinkage in the expanded beads is weak, and the problem of shrinkage has been likely to occur significantly.

On the other hand, in the blowing agent adding step, the physical blowing agent containing the specific amount of the hydrofluoroolefin is added into the sealed container to impregnate the resin particles with the physical blowing agent. According to the producing method including the blowing agent adding step as mentioned above, even when expanded beads having an apparent density of, for example, 50 $kg/m^3$ or less are produced in the expanding step, shrinkage of the expanded beads immediately after production can be curtailed. Although the reason for this is not clear, for example, it is considered that the rate of dissipation of the hydrofluoroolefin from the expanded beads immediately after expansion is moderately low.

In addition, by expanding the resin particles through the direct expanding method with the physical blowing agent containing the hydrofluoroolefin, expanded beads capable of being molded in a wide range of molding pressures from low pressure to high pressure can be obtained. Although the reason for this is not clear, for example, it is considered that the physical blowing agent is slowly separated from the resin particles in the expanding step due to good affinity of the hydrofluoroolefin for the polyolefin-based resin, and reduction of the sizes of cells to be formed in the expanded beads is curtailed.

Furthermore, according to the above producing method, expanded beads having a low apparent density can be produced by one-step expansion. As a result, it is not necessary to perform the second expanding step, that is, the step of further decreasing the apparent density of the first-step expanded beads, and the variation in the particle diameter of the expanded beads can be reduced.

When the addition amount of the hydrofluoroolefin in the blowing agent adding step is too small, the effect of the hydrofluoroolefin is reduced, and it may be difficult to produce expanded beads having a low apparent density by one-step expansion. Moreover, in this case, moldability of the expanded beads may be deteriorated. Further, in this case, the second expanding step is required to obtain expanded beads having a low apparent density, and this may cause increase in variation of the particle diameter of the expanded beads and/or further deterioration in moldability. These problems can be easily avoided by setting the addition amount of the hydrofluoroolefin to 10 parts by mass or more with respect to 100 parts by mass of the resin particles. From the viewpoint of more reliably obtaining the effect of the hydrofluoroolefin, the addition amount of the hydrofluoroolefin is preferably 12 parts by mass or more, more preferably 14 parts by mass or more with respect to 100 parts by mass of the resin particles.

On the other hand, when the hydrofluoroolefin content is too large, the resin particles are excessively expanded, and expanded beads having a desired apparent density may not be obtained. By setting the addition amount of the hydrofluoroolefin to 30 parts by mass or less with respect to 100 parts by mass of the resin particles, such a problem can be easily avoided. From the same viewpoint and the viewpoint of reducing the producing cost, the addition amount of the hydrofluoroolefin is preferably 28 parts by mass or less, more preferably 26 parts by mass or less with respect to 100 parts by mass of the resin particles.

From the viewpoint that the effect of the hydrofluoroolefin is surely obtained and the cell structure of the expanded beads can be structured as desired in a more reliable manner, the addition amount of the hydrofluoroolefin is preferably 12 parts by mass or more and 26 parts by mass or less, more preferably 14 parts by mass or more and 26 parts by mass or less with respect to 100 parts by mass of the resin particles.

The physical blowing agent used in the blowing agent adding step may contain a blowing agent other than the hydrofluoroolefin. Examples of the blowing agent other than the hydrofluoroolefin include inorganic physical blowing agents such as water, air, nitrogen, carbon dioxide, and argon. From the viewpoint of more reliably obtaining the above-described effect, the proportion of the hydrofluoroolefin in the physical blowing agent is preferably 80 mass% or more, more preferably 90 mass% or more, most preferably 100 mass%, that is, the physical blowing agent is most preferably composed of only the hydrofluoroolefin.

The hydrofluoroolefin (HFO) refers to a fluorine-containing hydrocarbon having a structure in which at least a hydrogen atom(s) and a fluorine atom(s) are bonded to a carbon skeleton having an unsaturated bond. For example, the hydrofluoroolefin may have a structure in which a hydrogen atom(s) and a fluorine atom(s) are bonded to a carbon skeleton having an unsaturated bond. In addition to a hydrogen atom(s) and a fluorine atom(s), a chlorine atom(s) may be bonded to the carbon skeleton of the hydrofluoroolefin. That is, the concept of the hydrofluoroolefin referred to in the present specification includes a hydrochlorofluoroolefin (HCFO) having a structure in which a hydrogen atom(s), a fluorine atom(s), and a chlorine atom(s) are bonded to a carbon skeleton having an unsaturated bond.

More specifically, examples of the hydrofluoroolefin that can be used as the physical blowing agent include 1,3,3,3-tetrafluoropropene (HFO-1234ze), 1,1,1-4,4,4-hexafluoro-2-butene (HFO-1336mzz), 2,3,3,3-tetrafluoropropene (HFO-1234yf), 1-chloro-3,3,3-trifluoropropene (HCFO-1233zd), and 1-chloro-2,3,3,3-tetrafluoropropene (HCFO-1224yd). These hydrofluoroolefins may be a trans form or a cis form. The physical blowing agent may contain one kind of hydrofluoroolefin, and may contain two or more kind of hydrofluoroolefin.

The hydrofluoroolefin preferably has a carbon skeleton of which a carbon number is three or more and five or less. By using such an hydrofluoroolefin as the physical blowing agent, shrinkage of the expanded beads immediately after expansion can be more effectively curtailed, and moldability of the expanded beads can be further improved. The reason for this is not clear, but for example, it is conceivable that the hydrofluoroolefin has a relatively large molecular skeleton, so that the permeation rate of gas in the polyolefin-based resin is reduced. From the same viewpoint, the molecular weight of the hydrofluoroolefin is preferably 100 or more, more preferably 130 or more. On the other hand, the upper limit of the molecular weight of the hydrofluoroolefin is about 200.

The hydrofluoroolefin preferably contains a chlorine atom(s) in its molecular structure. That is, the physical blowing agent used in the blowing agent adding step preferably contains a hydrochlorofluoroolefin. The hydrochlorofluoroolefin has higher affinity with the polyolefin-based resin than the hydrofluoroolefin containing no chlorine atom. Therefore, the hydrochlorofluoroolefin used as the physical blowing agent makes it possible to more effectively curtail reduction in the size of the cells in the expanded beads and to further improve the moldability of the expanded beads.

From the viewpoint of further enhancing the moldability of the expanded beads, the hydrofluoroolefin is more preferably one or more compounds selected from the group consisting of 1-chloro-3,3,3-trifluoropropene and 1-chloro-2,3,3,3-tetrafluoropropene.

In the blowing agent adding step, by adding the physical blowing agent into the sealed container, the resin particles in the aqueous medium can be impregnated with the physical blowing agent. In the blowing agent adding step, the entire amount of the physical blowing agent may be added at a time into the sealed container, and the physical blowing agent may be dividedly added into the sealed container more than once. In addition, in the blowing agent adding step, the inside of the sealed container may be pressurized and the contents in the sealed container may be heated as needed so that the impregnation of the physical blowing agent into the resin particles can be promoted.

The producing method preferably further includes a high-temperature peak forming step of maintaining the temperature in the sealed container at a temperature of (the melting point of the polyolefin-based resin - 30°C) or higher and (the melting end temperature of the polyolefin-based resin) or lower for 1 to 60 minutes. By performing the high-temperature peak forming step, secondary crystals are formed in the polyolefin-based resin constituting the expanded beads, and expanded beads having excellent mechanical strength and excellent moldability can be easily obtained.

The timing of performing the high-temperature peak forming step is not particularly limited, but from the viewpoint of sufficiently impregnating the resin particles with the hydrofluoroolefin, it is preferable to perform the high-temperature peak forming step after the impregnation of the hydrofluoroolefin into the resin particles is completed. Specifically, it is preferable to perform the high-temperature peak forming step after the blowing agent adding step.

<Expanding Step>

After the impregnation of the resin particles with the blowing agent is completed in the blowing agent adding step, the expanding step is performed. In the expanding step, the contents of the sealed container are released to a lower pressure environment than in the sealed container. As a result, the resin particles are expanded and foamed to form a cell structure, and the cell structure is stabilized by being cooled by the outside air. Accordingly, expanded beads having an apparent density of 10 kg/m$^3$ or more and 80 kg/m$^3$ or less can be obtained. The expanded beads thus obtained are less likely to be shrunk even when the apparent density is low, and have excellent moldability. In addition, in the expanding step, since the resin particles are expanded so as to have an apparent density in the specific range in one step, the variation in the particle diameter of the expanded beads can be reduced.

From the viewpoint of more reliably obtaining the above-described effect, it is preferable to maintain the pressure immediately before the expanding step by pressurizing the inside of the sealed container while the contents of the sealed container are released in the expanding process. In this case, an inorganic gas such as nitrogen can be used for pressurization in the sealed container. The inorganic gas used for maintaining the pressure in the sealed container in the expanding step is not included in the physical blowing agent in the present specification.

The pressure inside the sealed container at the time of expansion is preferably 0.5 MPa (G) or more in terms of gauge pressure. On the other hand, the pressure inside the sealed container is preferably 4.0 MPa (G) or less in terms of gauge pressure. Within the above range, expanded beads can be produced safely without the risk of breakage, explosion, or the like of the sealed container.

<Shrinkage Ratio of Expanded Beads>

The shrinkage ratio of the polyolefin-based resin expanded beads immediately after the completion of the expanding step is preferably 5% or less, more preferably 3% or less, still more preferably 1% or less. The expanded beads having a shrinkage ratio within the above-mentioned specific range can easily provide a molded article of expanded beads having a low density and good quality even when in-mold molding is subsequently performed without recovery from shrinkage. With the expanded beads having a shrinkage ratio within the above-mentioned specific range, the internal pressure application time, during which the internal pressure is applied to the expanded beads, is shortened in the molding step described later. Therefore, by using such expanded beads, the productivity of the molded article of expanded beads can be further improved. It is noted that the lower limit of the shrinkage ratio of the polyolefin-based resin expanded beads is 0%.

The method for measuring the shrinkage ratio of the expanded beads described above is as follows. First, the expanded beads immediately after production are dried in an atmosphere at a temperature of 60°C for 1 hour, and then a bulk ratio M1 of the expanded beads is measured by a method described later. Next, the expanded beads are placed in a pressure-resistant container, and an inorganic gas is injected into the pressure-resistant container to pressurize the inside of the container to 0.3 MPa (G). By maintaining this pressure for 12 hours, the expanded beads are impregnated with the inorganic gas such as air, and by increasing the pressure in the cells of the expanded beads, an internal pressure is applied. The expanded beads having the internal pressure applied thereto are taken out from the pressure-resistant container and then left for 12 hours under the atmospheric pressure, thus the shrinkage of the expanded beads can be recovered. A bulk ratio M2 of the expanded beads recovered from shrinkage in this manner is measured by a method described later. The shrinkage ratio (unit: %) of the expanded beads is a value calculated on the basis of following Formula (1) using the bulk ratios M1 and M2 obtained in this manner. The expanded beads immediately after production refer to expanded beads immediately after the expanding step is completed (more specifically, the expanded beads at the time when all the contents in the sealed container have been released in the expanding step).

$$\text{Shrinkage ratio} = (M2 - M1)/M2 \times 100 \qquad \cdots \ (1)$$

The bulk ratio of the expanded beads is a value obtained by dividing the density (unit: $kg/m^3$) of the polyolefin-based resin constituting the expanded beads by the bulk density (unit: $kg/m^3$) of the expanded beads. The method for measuring the bulk density of the expanded beads is as follows. The expanded beads to be measured are filled in a measuring cylinder so as to be naturally deposited, and the bulk volume (unit: L) of the expanded beads is read on the scale of the measuring cylinder. Then, the bulk density (unit: $kg/m^3$) of the expanded beads can be obtained by unit conversion of the value obtained by dividing the mass (unit: g) of the expanded beads in the measuring cylinder by the above-described bulk volume.

(Polyolefin-based resin expanded beads)

According to the producing method, polyolefin-based resin expanded beads can be obtained. The base resin of the polyolefin-based resin expanded beads is a polyolefin-based resin. The polyolefin-based resin constituting the expanded beads is the same as the polyolefin-based resin constituting the resin particles described above. Therefore, for the specific configuration of the polyolefin-based resin in the expanded beads, the description of the polyolefin-based resin in the resin particles can be appropriately referred to.

The expanded beads are obtained by expanding resin particles with the physical blowing agent containing the hydrofluoroolefin. For the specific configuration of the physical blowing agent contained in the expanded beads, the description of the physical blowing agent used in the blowing agent adding step can be appropriately referred to.

<Apparent Density>

The apparent density of the expanded beads is 10 $kg/m^3$ or more and 80 $kg/m^3$ or less. As described above, by using the physical blowing agent containing the hydrofluoroolefin, shrinkage of the expanded beads immediately after expansion can be curtailed even when expanded beads having an apparent density in the specific range are produced by the direct expanding method. In addition, the expanded beads can easily form a good molded article in a wide molding pressure range from a low pressure to a high pressure. From the viewpoint of making such an effect more beneficial, the apparent density of the expanded beads is preferably 10 kg/m$^3$ or more and 50 kg/m$^3$ or less, more preferably 15 kg/m$^3$ or more and 45 kg/m$^3$ or less, still more preferably 18 kg/m$^3$ or more and 30 kg/m$^3$ or less.

The method for calculating the apparent density of the expanded beads is as follows. First, the expanded beads are conditioned by allowing the expanded beads to stand for 1 day in an environment of a relative humidity of 50%, a temperature of 23°C, and an atmospheric pressure of 1 atm. After measuring the mass (unit: g) of the expanded beads, the expanded beads are immersed in an alcohol (such as ethanol) having a temperature of 23°C contained in a measuring cylinder by using a wire mesh or the like, and the volume (unit: L) of the expanded beads is determined from the increase in the liquid level. Thereafter, the apparent density (unit: kg/m$^3$) of the expanded beads can be obtained by unit conversion of the value obtained by dividing the mass of the expanded beads by the volume of the expanded beads.

<Average Value and Coefficient of Variation of Short Diameter>

The average value of the short diameters of the expanded beads is 1.0 mm or more and 5.0 mm or less, and the coefficient of variation of the short diameters is 10% or less. That is, in the expanded bead group including a large number of the expanded beads, when the short diameters of the expanded beads constituting the expanded bead group each are measured, the average value of the short diameters of the expanded beads calculated using the short diameters of these expanded beads is 1.0 mm or more and 5.0 mm or less, and the coefficient of variation of the short diameter is 10% or less. As described above, by using the physical blowing agent containing the hydrofluoroolefin, expanded beads having a low apparent density can be produced by one-step expansion. As a result, it is possible to obtain such expanded beads having small variation in particle diameter that the apparent density is within the above range and the average value and the coefficient of variation of the short diameters are within the above respective specific ranges. In addition, the energy absorption performance of the molded article of expanded beads can be more easily improved by preparing the molded article of expanded beads with the expanded beads showing the average value and the coefficient of variation of the short diameters within the above-mentioned respective specific ranges. The lower limit of the coefficient of variation of the short diameters is about 1%.

In the past, in the case where expanded beads having a particularly small apparent density, such as 30 kg/m$^3$ or less, were to be produced while avoiding the problem of shrinkage, the two-step expanding method has to be adopted, and it had been difficult to reduce the coefficient of variation of the short diameters of the resulting expanded beads. On the other hand, according to the above producing method, these problems can be solved, and expanded beads having a low apparent density and a small coefficient of variation of the short diameters can be easily produced.

From the viewpoint of further enhancing the filling property of the expanded beads and the energy absorption performance of the molded article, the average value of the short diameters of the expanded beads is more preferably 2.0 mm or more and 4.0 mm or less.

The average value of the short diameters and the coefficient of variation of the short diameters of the expanded beads can be measured using a projected image photographing type particle size distribution measuring apparatus. The short diameter of an expanded bead refers to a length (that is, the minimum Feret diameter) at which a distance between two parallel lines enclosing the expanded bead is minimized in a projected image of the expanded bead captured by the projected image photographing type particle size distribution measuring apparatus. The average value $T_{av}$ (unit: mm) of the short diameters of the expanded beads is a value calculated on the basis of following Formula (2). In addition, the coefficient of variation $T_{cv}$ (unit: %) of the short diameter of the expanded beads is a value obtained by expressing the ratio of a standard deviation $T_{sd}$ (unit: mm) of the short diameters to the average value $T_{av}$ of the short diameters of the expanded beads in percentage as shown in following Formula (3). The standard deviation $T_{sd}$ of the short diameters of the expanded beads is a value calculated on the basis of following Formula (4).

$$T_{av} = \Sigma(T_i)/n \qquad \cdots \ (2)$$

$$T_{cv} = T_{sd}/T_{av} \times 100 \qquad \cdots \ (3)$$

$$T_{sd} = \left(\Sigma(T_i - T_{av})^2/(n-1)\right)^{1/2} \qquad \cdots \ (4)$$

The symbol $T_i$ in Formulas (2) and (4) above is the value (unit: mm) of the short diameter of the i-th measured expanded bead, and n is the total number of the measured expanded beads. The value of n has only to be, for example, 1,000 or more.

<Average Cell Diameter>

The average cell diameter of the expanded beads is preferably 100 $\mu$m or more. The expanded beads having an average cell diameter of 100 $\mu$m or more are more excellent in moldability because the reduction of the cell size is further curtailed. From the same viewpoint, the average cell diameter of the expanded beads is more preferably 110 $\mu$m or more. On the other hand, the upper limit of the average cell diameter of the expanded beads is preferably 300 $\mu$m, more preferably 250 $\mu$m, still more preferably 200 $\mu$m. From the viewpoint of further curtailing the reduction of the cell size, it is preferable to use one or two or more propylene-based copolymers selected from a propylene-ethylene random copolymer, a propylene-butene random copolymer, and a propylene-ethylene-butene random copolymer as the polypropylene-based resin.

In configuring the preferable range of the average cell diameter of the expanded beads, the upper limit and the lower limit of the average cell diameter of the expanded beads described above can be arbitrarily combined. For example, a preferable range of the average cell diameter of the expanded beads may be 100 $\mu$m or more and 300 $\mu$m or less, 110 $\mu$m or more and 250 $\mu$m or less, or 110 $\mu$m or more and 200 $\mu$m or less.

The average cell diameter of the expanded beads is a value calculated by the following method. First, an expanded bead is cut into two approximately equal parts. Next, an enlarged photograph is acquired so that the entire exposed cut surface will fall within the field of view. On the obtained enlarged photograph, four line segments from the outermost surface of the expanded bead to the opposite outermost surface through the central portion are drawn so that the angles formed by the adjacent line segments will be equal (that is, the angles formed by the adjacent line segments are set to 45°). A value obtained by dividing the total length of the four line segments thus obtained by the total number of cells intersecting the line segments is defined as the cell diameter of each expanded bead.

The above operation is performed on 10 or more expanded beads randomly extracted, and a value obtained by arithmetically averaging the cell diameters of the expanded beads obtained for the respective expanded beads is taken as the average cell diameter of the expanded beads.

<Residual Amount of Hydrofluoroolefin in Expanded Beads>

The amount of the hydrofluoroolefin contained in each polyolefin-based resin expanded bead is preferably 1 mass% or less, more preferably 0.5 mass% or less, still more preferably 0.1 mass% or less, particularly preferably 0 mass%. By performing in-mold molding using such expanded beads, a molded article of expanded beads having excellent rigidity can be easily obtained by utilizing the characteristics of the polyolefin-based resin. The amount of the hydrofluoroolefin contained in each expanded bead can be measured using a headspace gas chromatograph mass spectrometer.

The hydrofluoroolefin impregnated into the resin particles as the physical blowing agent is rapidly dissipated from the polyolefin-based resin expanded beads immediately after expansion. Therefore, in the case of the expanded beads obtained by the above producing method, for example, the amount of the hydrofluoroolefin in the expanded beads left to stand for three days at normal pressure and normal temperature from the time point immediately after production falls to 1 mass% or less. The hydrofluoroolefin may be used, for example, for the purpose of improving heat insulating properties by utilizing the property of being likely to remain in a polystyrene-based resin foamed article or the like. However, the dissipation behavior of the hydrofluoroolefin in the polyolefin-based resin expanded beads obtained by the above producing method is completely different from the dissipation behavior of the hydrofluoroolefin in a polystyrene-based resin foamed article.

<High-Temperature Peak>

The expanded beads preferably have a crystal structure in which an endothermic peak due to melting inherent to the polyolefin-based resin constituting the expanded beads and one or more melting peaks located on a higher temperature side than the endothermic peak appear in a DSC curve obtained when heated from 23°C to 200°C at a heating rate of 10°C/min. The expanded beads having such a crystal structure have excellent mechanical strength and excellent moldability. Hereinafter, the endothermic peak due to melting inherent to the polyolefin-based resin appearing in the DSC curve is referred to as a "resin intrinsic peak", and the melting peak appearing on a higher temperature side than the resin intrinsic peak is referred to as a "high-temperature peak". The resin intrinsic peak is generated by endotherm when the crystal originally possessed by the polyolefin-based resin constituting the expanded beads melts. On the other hand, it is presumed that the high-temperature peak is generated due to melting of secondary crystals formed in the polyolefin-based resin constituting the expanded beads during the process of producing the expanded beads. That is, when the high-temperature peak appears in the DSC curve, it is presumed that secondary crystals have been formed in the polyolefin-based resin.

It is sufficient that whether the expanded beads have the above-described crystal structure is determined on the basis of a DSC curve obtained by performing differential scanning calorimetry (DSC) under the above-described conditions in accordance with JIS K 7121:1987. In performing DSC, 1 to 3 mg of expanded beads only needs to be used as a sample.

Specifically, in the DSC curve obtained when heating from 23°C to 200°C (that is, first heating) is performed at a heating rate of 10°C/min as described above, both the high-temperature peak and the resin intrinsic peak of the polyolefin-based resin constituting the expanded beads appear. On the other hand, in the DSC curve obtained by performing the first heating, then cooling from 200°C to 23°C at a cooling rate of 10°C/min, and then heating from 23°C to 200°C again at a heating rate of 10°C/min (that is, second heating), only the resin intrinsic peak of the polyolefin-based resin constituting the expanded beads is observed. Therefore, by comparing the DSC curve obtained at the time of the first heating with the DSC curve obtained at the time of the second heating, the resin intrinsic peak and the high-temperature peak can be distinguished. The vertex temperature of the resin intrinsic peak may be slightly different between the first heating and the second heating, but the difference is usually within 5°C.

The heat of fusion of the high-temperature peak of the expanded beads is preferably 5 J/g or more and 40 J/g or less, more preferably 7 J/g or more and 30 J/g or less, still more preferably 10 J/g or more and 20 J/g or less from the viewpoint of further improving the moldability of the expanded beads and obtaining a molded article having more excellent rigidity.

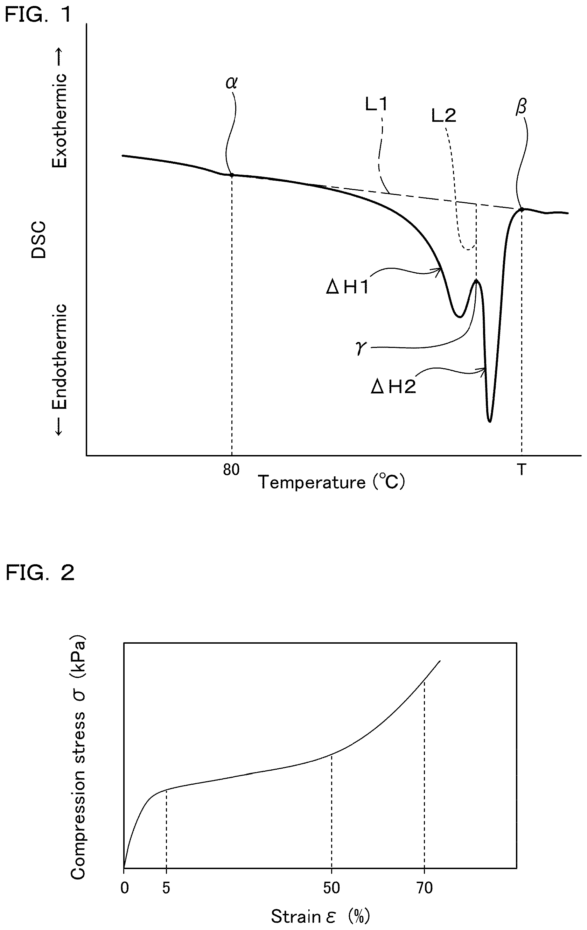

The heat of fusion of the high-temperature peak described above is a value determined as follows. First, 1 to 3 mg of the expanded beads subjected to the conditioning is used as a sample, and differential scanning calorimetry is performed under the condition of heating from 23°C to 200°C at a heating rate of 10°C/min to obtain a DSC curve. Fig. 1 shows an example of the DSC curve. In the case where the expanded beads have a high-temperature peak, in the DSC curve, a resin intrinsic peak $\Delta H1$ and a high-temperature peak $\Delta H2$ having a vertex on a higher temperature side than the vertex of the resin intrinsic peak $\Delta H1$ appear as shown in Fig. 1.

Next, a straight line L1 connecting a point $\alpha$ corresponding to 80°C and a point $\beta$ corresponding to a melting end temperature T of the expanded beads on the DSC curve is drawn. The melting end temperature T is an end point on the high-temperature side of the high-temperature peak $\Delta H2$, that is, an intersection of the high-temperature peak $\Delta H2$ and the baseline on the higher temperature side than the high-temperature peak $\Delta H2$ on the DSC curve.

After the straight line L1 is drawn, a straight line L2 passing through a maximum point $\gamma$ existing between the resin intrinsic peak $\Delta H1$ and the high-temperature peak $\Delta H2$ and parallel to the vertical axis of the graph is drawn. The straight line L2 divides the resin intrinsic peak $\Delta H1$ and the high-temperature peak $\Delta H2$. The endothermic amount of the high-temperature peak $\Delta H2$ can be calculated on the basis of the area of the portion surrounded by the portion of the DSC curve constituting the high-temperature peak $\Delta H2$, the straight line L1, and the straight line L2.

Examples

Examples of the expanded beads and the method for producing the same will be described.

(Example 1)

In the present example, polypropylene-based resin expanded beads were prepared by expanding polypropylene-based resin particles by the direct expanding method with an hydrochlorofluoroolefin as the physical blowing agent. A more detailed method for producing the expanded beads of the present example is as follows.

<Production of Polypropylene-based Resin Particles>

Polypropylene-based resin particles were produced by the strand cutting method. In the production of the polypropylene-based resin particles, an extrusion apparatus including an extruder having an inner diameter of 50 mm and a die attached to the tip of the extruder was used. First, a polypropylene-based resin and zinc borate as a cell nucleating agent were charged into the extruder and melt-kneaded in the extruder to form a resin melt-kneaded product. Thereafter, the resin melt-kneaded product was extruded from the die of the extruder to obtain an extrudate. This extrudate was cooled by passing it through a water tank containing water, and then cut into an appropriate length using a pelletizer to obtain polypropylene-based resin particles. The obtained polypropylene-based resin particles were substantially uniform, and the mass per one polypropylene-based resin particle was about 1.0 mg.

The polypropylene-based resin used in the present example was an ethylene-propylene random copolymer. The melting point of the ethylene-propylene random copolymer, measured in accordance with JIS K 7121:1987, was 143°C. The flexural modulus of the ethylene-propylene random copolymer, measured in accordance with JIS K 7171:2008, was 980 MPa. In addition, the melt mass flow rate of the ethylene-propylene random copolymer, measured under the conditions of a temperature of 230°C and a load of 2.16 kg in accordance with JIS K 7210-1:2014, was 8 g/10 min. The density of the ethylene-propylene random copolymer is 900 kg/m$^3$. In Table 1, the ethylene-propylene random copolymer used in the present example is listed as "rPP".

The cell nucleating agent used in the present example was zinc borate. The addition amount of zinc borate was 1000 ppm by mass with respect to the mass of the resin particles as shown in Table 1.

<Dispersing Step>

Next, 1 kg of the polypropylene-based resin particles was put into a sealed container having a capacity of 5 L together with 3 L of water as the aqueous medium. Then, 0.3 parts by mass of a dispersant, 0.004 parts by mass of a surfactant, and 0.01 parts by mass of a dispersing aid with respect to 100 parts by mass of the resin particles were added in the sealed container, and then the resin particles were dispersed in the aqueous medium. Kaolin was used as the dispersant, sodium dodecylbenzenesulfonate ("NEOGEN (registered trademark)" manufactured by DKS Co., Ltd.) was used as the surfactant, and aluminum sulfate was used as the dispersion aid.

<Blowing Agent Adding Step>

Next, in a state where the sealed container was sealed, a hydrochlorofluoroolefin was added to the sealed container in an amount shown in Table 1 with respect to 100 parts by mass of the polypropylene-based resin. Thereafter, the inside of the sealed container was heated at a temperature rising rate of 2°C/min while being stirred, and the temperature in the container was raised to the expanding temperature shown in Table 1. The pressure inside the container at this time was 1.5 MPa (G) in terms of gauge pressure. The hydrochlorofluoroolefin used in the present example was specifically trans-1-chloro-3,3,3-trifluoropropene (HCFO-1233zd). In Table 1, the hydrochlorofluoroolefin used in the present example is listed as "HCFO1".

<High-Temperature Peak Forming Step>

After the temperature in the sealed container reached the expanding temperature shown in Table 1, this temperature was maintained for 15 minutes. Thus, the condition of the resin particles was adjusted so that a high-temperature peak described later appeared in the DSC curve of the resulting expanded beads.

<Expanding Step>

After the high-temperature peak forming step was completed, the pressure in the sealed container was increased to a value 0.5 MPa higher than the value shown in Table 1 using nitrogen gas. The sealed container was opened while maintaining this pressure, and the contents were released to atmospheric pressure to expand the resin particles. As described above, the resin particles were expanded to obtain polypropylene-based resin expanded beads.

(Example 2)

In the present example, polypropylene-based resin expanded beads were produced in the same manner as in Example 1 except that 1-chloro-2,3,3,3-tetrafluoropropene (HCFO-1224yd) was used as the physical blowing agent, and the expansion temperature was changed to the value shown in Table 1. In Table 1, the hydrochlorofluoroolefin used in the present example is listed as "HCFO2".

(Example 3)

In the present example, instead of the hydrochlorofluoroolefin, an hydrofluoroolefin containing no chlorine in the molecular structure was used as the physical blowing agent. Specifically, polypropylene-based resin expanded beads were produced in the same manner as in Example 1 except that trans-1,3,3,3-tetrafluoropropene (HFO-1234ze) was used, and the expansion temperature was changed to the value shown in Table 1. In Table 1, the hydrofluoroolefin used in the present example is listed as "HFO1".

(Example 4)

In the present example, polypropylene-based resin expanded beads were produced in the same manner as in Example 1 except that the addition amount of the hydrochlorofluoroolefin and the expansion temperature were changed to the values shown in Table 1.

(Example 5)

In the present example, polyethylene-based resin expanded beads were prepared by expanding polyethylene-based resin particles by the direct expanding method with an hydrochlorofluoroolefin as the physical blowing agent. A more detailed method for producing the expanded beads of the present example is as follows.

<Production of Polyethylene-based Resin Particles>

The polyethylene-based resin particles were produced by the strand cutting method. In the production of the polyethylene-based resin particles, an extrusion apparatus including an extruder having an inner diameter of 50 mm and a die attached to the tip of the extruder was used. First, a polyethylene-based resin and zinc borate as a cell nucleating agent were charged into the extruder and melt-kneaded in the extruder to form a resin melt-kneaded product. Thereafter, the resin melt-kneaded product was extruded from the die of the extruder to obtain an extrudate. This extrudate was cooled by passing it through a water tank containing water, and then cut into an appropriate length using a pelletizer to obtain polyethylene-based resin particles. The obtained polyethylene-based resin particles were substantially uniform, and the mass per one polyethylene-based resin particle was about 1.5 mg.

The polyethylene-based resin used in the present example was linear low density polyethylene (PE-LLD). The melting point of the PE-LLD, measured in accordance with JIS K 7121:1987, was 120°C. In addition, the melt mass flow rate of the PE-LLD, measured under the conditions of a temperature of 190°C and a load of 2.16 kg in accordance with JIS K 7210-1:2014, was 1.0 g/10 min. The density of the PE-LLD is 925 kg/m$^3$. In Table 2, the PE-LLD used in the present example is listed as "PE".

The cell nucleating agent used in the present example was zinc borate. The addition amount of zinc borate was 200 ppm by mass with respect to the mass of the resin particles as shown in Table 2.

<Dispersing Step>

Next, 1 kg of the polyethylene-based resin particles was put into a sealed container having a capacity of 5 L together with 3 L of water as the aqueous medium. Then, 0.3 parts by mass of a dispersant and 0.006 parts by mass of a surfactant with respect to 100 parts by mass of the resin particles were added in the sealed container to disperse the resin particles in the aqueous medium. Mica was used as the dispersant, and sodium dodecylbenzenesulfonate ("NEOGEN (registered trademark)" manufactured by DKS Co., Ltd.) was used as the surfactant.

<Blowing Agent Adding Step>

Next, in a state where the sealed container was sealed, an hydrochlorofluoroolefin was added to the sealed container in an amount shown in Table 2 with respect to 100 parts by mass of the polyethylene-based resin. Thereafter, the inside of the sealed container was heated at a temperature rising rate of 2°C/min while being stirred, and the temperature in the container was raised to the expanding temperature shown in Table 2. The pressure inside the container at this time was 1.1 MPa (G) in terms of gauge pressure. The hydrochlorofluoroolefin used in the present example was specifically trans-1-chloro-3,3,3-trifluoropropene (HCFO-1233zd).

<High-Temperature Peak Forming Step>

After the temperature in the sealed container reached the expanding temperature shown in Table 2, this temperature was maintained for 15 minutes. Thus, the condition of the resin particles was adjusted so that a high-temperature peak described later appeared in the DSC curve of the resulting expanded beads.

<Expanding Step>

After the high-temperature peak forming step was completed, the pressure in the sealed container was increased to a value 0.5 MPa higher than the value shown in Table 2 using nitrogen gas. The sealed container was opened while maintaining this pressure, and the contents were released to atmospheric pressure to expand the resin particles. As described above, the resin particles were expanded to obtain polyethylene-based resin expanded beads.

(Comparative Example 1)

In the present example, polypropylene-based resin expanded beads were prepared by the same method as in Example 1 except that carbon dioxide ($CO_2$) was used as the physical blowing agent, and the blowing agent adding step was changed as follows. The blowing agent adding step in the present example is specifically as follows.

<Blowing Agent Adding Step>

The polypropylene-based resin particles were dispersed in the aqueous medium in the sealed container by the same method as in Example 1, and then carbon dioxide was supplied into the sealed container in a state where the sealed container was sealed to increase the pressure in the sealed container to 1.0 MPa (G). After the supply of carbon dioxide was completed, the inside of the sealed container was heated at a temperature rising rate of 2°C/min while being stirred, and the temperature in the container was raised to a temperature 0.5°C lower than the expanding temperature shown in Table 1. Then, carbon dioxide was supplied again into the sealed container, and the pressure in the sealed container was increased to the value shown in Table 1.

After the filling of carbon dioxide was completed, the inside of the sealed container was further heated to increase the temperature in the container to the expanding temperature shown in Table 1. Then, by maintaining this temperature for 15 minutes, the resin particles were sufficiently impregnated with carbon dioxide, and the condition of the resin particles was adjusted so that a high-temperature peak was formed in the DSC curve of the expanded beads. Thereafter, the expanding step was performed in the same manner as in Example 1 to obtain polypropylene-based resin expanded beads. In the present example, since it is difficult to express the amount of the physical blowing agent (that is, carbon dioxide) added in the blowing agent adding step by mass, "-" is listed for the addition amount of the blowing agent in Table 1.

(Comparative Example 2)

In the present example, polypropylene-based resin expanded beads were produced in the same manner as in Comparative Example 1 except that nitrogen ($N_2$) was used as the physical blowing agent, and the expansion temperature was changed to the temperature shown in Table 1.

(Comparative Example 3)

In the present example, polypropylene-based resin expanded beads were produced by the two-step expanding method. More specifically, first, the polypropylene-based resin particles were expanded using carbon dioxide as the physical blowing agent and in the same manner as in Comparative Example 1 except that the expansion temperature and the pressure in the container were changed to the values shown in Table 1 to obtain first-step expanded beads. The apparent density of the first-step expanded beads was 81 kg/m$^3$.

Next, the first-step expanded beads were placed in a pressure-resistant container, and the inside of the pressure-resistant container was pressurized with an inorganic gas to increase the pressure in the cells of the first-step expanded beads. Thereafter, the first-step expanded beads taken out from the pressure-resistant container were heated using a heating medium to further expand the first-step expanded beads, thereby decreasing the apparent density. The polypropylene-based resin expanded beads were thus obtained.

(Comparative Example 4)

In the present example, polypropylene-based resin expanded beads were produced by the two-step expanding method similar to the method used in Comparative Example 3 except that nitrogen was used as the physical blowing agent, and the expansion temperature and the equilibrium pressure were changed to the values shown in Table 1.

(Comparative Example 5)

In the present example, polypropylene-based resin expanded beads were produced in the same manner as in Example 1 except that the addition amount of the hydrochlorofluoroolefin and the expansion temperature were changed to the values shown in Table 1.

(Comparative Example 6)

In the present example, polyethylene-based resin expanded beads were prepared by the same method as in Example 6 except that carbon dioxide ($CO_2$) was used as the physical blowing agent, the production conditions were changed as shown in Table 2, and the two-step expanding method was employed.

(Example 6)

In the present example, a propylene homopolymer (homopolypropylene) was used as the polypropylene-based resin. The melting point of the propylene homopolymer, measured in accordance with JIS K 7121:1987, was 163°C. The flexural modulus of the propylene homopolymer, measured in accordance with JIS K 7171:2008, was 1350 MPa. In addition, the melt mass flow rate of the propylene homopolymer, measured under the conditions of a temperature of 230°C and a load of 2.16 kg in accordance with JIS K 7210-1:2014, was 9 g/10 min. The density of the propylene homopolymer is 900 kg/m$^3$. In Table 2, the propylene homopolymer used in the present example is listed as "hPP". The addition amount of the hydrochlorofluoroolefin, the expansion temperature, and the pressure in the container in the producing method of the present example were as shown in Table 2.

The method for producing the polypropylene-based resin expanded beads of the present example was the same as that in Example 1 except that these points were changed.

Next, a method for evaluating various properties of the expanded beads obtained as described above will be described.

<Heat of High Temperature Peak>

The expanded beads were conditioned by allowing the expanded beads to stand for 24 hours or longer in an environment of a relative humidity of 50%, a temperature of 23°C, and an atmospheric pressure of 1 atm. Using 1 to 3 mg of the conditioned expanded beads, differential scanning calorimetry was performed in accordance with JIS K 7121:1987 to obtain a DSC curve. The measurement starting temperature in DSC was 23°C, the measurement ending temperature was 200°C, and the heating rate was 10°C/min. As a measuring apparatus, a heat flux differential scanning calorimeter "DSC7020" manufactured by Hitachi High-Tech Science Corporation was used. The area of the high-temperature peak in the DSC curve obtained by the above-described method was calculated, and the heat of the high temperature peak was calculated on the basis of this value. Tables 1 and 2 show the heat of the high temperature peaks of the expanded beads in the examples and comparative examples.

<Apparent Density of Expanded Beads>

The expanded beads were conditioned by allowing the expanded beads to stand for 24 hours or longer in an environment of a relative humidity of 50%, a temperature of 23°C, and an atmospheric pressure of 1 atm. The mass of the conditioned expanded beads was measured, and then the expanded beads were immersed in ethanol having a temperature of 23°C contained in a measuring cylinder with a wire mesh. Then, in consideration of the volume of the wire mesh, the volume of the expanded beads read from the liquid level rise was measured. The apparent density (unit: kg/m$^3$) of the expanded beads was calculated by dividing the mass (unit: g) of the expanded beads thus obtained by the volume (unit: L) and then performing unit conversion. Tables 1 and 2 show the apparent densities of the expanded beads in the examples and comparative examples.

<Bulk Density and Bulk Ratio of Expanded Beads>

The expanded beads were conditioned by allowing the expanded beads to stand for 24 hours or longer in an environment of a relative humidity of 50%, a temperature of 23°C, and an atmospheric pressure of 1 atm. The conditioned expanded beads were filled in a measuring cylinder so as to be naturally deposited, and the bulk volume (unit: L) of the expanded beads was read on the scale of the measuring cylinder. Thereafter, the bulk density (unit: kg/m$^3$) of the expanded beads was calculated by dividing the mass (unit: g) of the expanded beads in the measuring cylinder by the above-described bulk volume and then subjecting the result to unit conversion. In addition, the bulk ratio of the expanded beads was calculated by dividing the density of the resin constituting the expanded beads by the bulk density of the expanded beads. Tables 1 and 2 show the bulk densities and the bulk ratios of the expanded beads in the examples and comparative examples.

<Closed Cell Content>

The closed cell content of the expanded beads was measured using an air comparison pycnometer in accordance with Procedure C in ASTM-D-2856-70. Specifically, determination was performed as follows. Using expanded beads having a bulk volume of about 20 cm$^3$ after conditioning as a measurement sample, an apparent volume Va was accurately measured by an ethanol immersion method as described below. The measurement sample of which apparent volume Va had been measured was sufficiently dried, and then, according to Procedure C described in ASTM-D-2856-70, a true volume value Vx of the measurement sample was measured with an air comparison pycnometer ("Beckman Model 1000 Air Comparison Pycnometer" manufactured by Tokyo-Science Co., Ltd.). Then, using these volume values Va and Vx, the closed cell content of the measurement sample was calculated on the basis of following Formula (5). The above operation was performed five times while changing the measurement sample, and the arithmetic average value (N = 5) of the closed cell contents of the five measurement samples was defined as the closed cell content of the expanded beads.

$$\text{Closed cell content (\%)} = (Vx - W/\rho) \times 100/(Va - W/\rho) \ \dots \ (5)$$

The meanings of the symbols in Formula (5) above are as follows.

Vx: the true volume of the expanded beads measured by the above method, that is, the sum (unit: $cm^3$) of the volume of the resin constituting the expanded beads and the total volume of the closed cell portions in the expanded beads

Va: the apparent volume (unit: $cm^3$) of the expanded beads measured from an increase in water level when the expanded beads are immersed in ethanol contained in a measuring cylinder

W: the mass (unit: g) of the measurement sample

$\rho$: the density (unit: $g/cm^3$) of the resin constituting the expanded beads

Tables 1 and 2 show the closed cell contents of the expanded beads in the examples and comparative examples.

<Average Cell Diameter of Expanded Beads>

First, an expanded bead was cut into two approximately equal parts. Next, an enlarged photograph was acquired so that the entire exposed cut surface would fall within the field of view. On the obtained enlarged photograph, four line segments from the outermost surface of the expanded bead to the opposite outermost surface through the central portion were drawn so that the angles formed by the adjacent line segments would be equal (that is, the angles formed by the adjacent line segments were set to 45°). The total length of the four line segments thus obtained was divided by the total number of cells intersecting the line segments to calculate the cell diameter of each expanded bead.

The above operation was performed on 10 or more expanded beads randomly extracted, and a value obtained by arithmetically averaging the cell diameters of the expanded beads obtained for the respective expanded beads was taken as the average cell diameter of the expanded beads. Tables 1 and 2 show the average cell diameters of the expanded beads in the examples and comparative examples. The average cell diameter of the expanded beads of Example 6 was not measured, and thus a symbol "-" is listed in the "average cell diameter" section.

<Average Value and Coefficient of Variation of Short Diameters>

From each of the expanded beads of the examples and comparative examples, 1000 expanded beads were randomly taken out, and the short diameter of individual expanded bead was measured using a projected image photographing type particle size distribution measuring apparatus ("PartAn 3D" manufactured by MicrotracBEL Corp.). Using the short diameters of the expanded beads thus obtained, the average value $T_{av}$ (unit: mm), the standard deviation $T_{sd}$ (unit: mm), and the coefficient of variation $T_{cv}$ (unit: %) of the short diameters of the expanded beads were calculated on the basis of following Formulas (2) to (4).

$$T_{av} = \Sigma(T_i)/n \qquad \cdots \ (2)$$

$$T_{cv} = T_{sd}/T_{av} \times 100 \qquad \cdots \ (3)$$

$$T_{sd} = (\Sigma(T_i - T_{av})^2/(n-1))^{1/2} \qquad \cdots \ (4)$$

The symbol $T_i$ in Formulas (2) and (4) above is the value (unit: mm) of the short diameter of the i-th measured expanded bead, and n is the total number of the measured expanded beads. Tables 1 and 2 show the average values $T_{av}$ and the coefficients of variation $T_{cv}$ of the short diameters of the expanded beads.

<Shrinkage Ratio of Expanded Beads>

The expanded beads immediately after production were dried in an atmosphere at a temperature of 60°C for 1 hour, and then the bulk ratio M1 of the expanded beads was measured. Next, the expanded beads were placed in a pressure-resistant container, and an inorganic gas was injected into the pressure-resistant container to pressurize the inside of the container to 0.3 MPa. By maintaining this pressure for 12 hours, the expanded beads were impregnated with the inorganic gas, and an internal pressure was applied by increasing the pressure in the cells of the expanded beads. The expanded beads having the internal pressure applied thereto were taken out from the pressure-resistant container and then left for 12 hours under the atmospheric pressure, to thereby recover the expanded beads from shrinkage. The bulk ratio M2 of the expanded beads shrinkage of which was recovered in this manner was measured.

Using the bulk ratios M1 and M2 obtained as described above, the shrinkage ratio (unit: %) of the expanded beads was calculated on the basis of following Formula (1). Tables 1 and 2 show the shrinkage ratios of the expanded beads in the examples and comparative examples.

$$\text{Shrinkage ratio} = (M2 - M1)/M2 \times 100 \qquad \cdots \ (1)$$

<Lower Limit of Molding Pressure and Moldable Range>

In the evaluation of the lower limit of the molding pressure and the moldable range, molded articles of expanded beads were prepared by performing in-mold molding while changing the molding pressure between 0.08 and 0.38 MPa (G) by 0.01 MPa during main heating, and the lower limit of the molding pressure and the moldable range were determined on the basis of the surface property, fusion bondability, and recoverability of the obtained molded articles.

The method for producing the molded articles of expanded beads was as follows. Firstly, the expanded beads were placed in a pressure-resistant container, then the inside of the pressure-resistant container was pressurized with an inorganic gas such as air or carbon dioxide to impregnate the expanded beads with the inorganic gas. In the result, an internal pressure of 0.10 MPa (G) was applied to the expanded beads. For an example in which molding was performed without applying the internal pressure, "-" is listed in a column of internal pressures in the table. Next, the expanded beads having the internal pressure applied thereto were filled in a mold by the cracking filling method. In the present example, a mold having a cavity capable of forming a flat-plate-shaped molded article of expanded beads with dimensions of 250 mm in length, 200 mm in width, and 50 mm in thickness was used. In the cracking filling, the expanded beads were filled in the mold with a cracking gap of 5 mm (that is, the cracking amount of 10%) in the thickness direction of the molded article, and then the mold was completely closed to mechanically compress the expanded beads in the mold.

Next, steam was supplied into the mold to perform in-mold molding. In the in-mold molding, first, steam was supplied into the mold for 5 seconds in a state where a drain valve of the mold was opened to perform preheating. Subsequently, the drain valve was closed, and steam was supplied from one surface side of the mold to perform one-side heating until a pressure lower than a molding pressure at the time of main heating by 0.08 MPa (G) was reached. Next, steam was supplied from the other surface side of the mold to perform one-side heating until a pressure lower than a molding pressure at the time of main heating by 0.04 MPa (G) was reached. Thereafter, steam was supplied from both surfaces of the mold until the molding pressure at the time of main heating was reached to perform main heating. After completion of the main heating, the pressure in the mold was released, and the molded article was cooled in the mold until the surface pressure due to the expansion force of the molded article reached 0.04 MPa (G).

The molded article of expanded beads taken out from the mold was then left to stand in an oven at 80°C for 12 hours to perform an aging step. After the aging step, the molded article of expanded beads was conditioned by allowing the molded article of expanded beads to stand for 24 hours under conditions of a relative humidity of 50%, 23°C, and 1 atm. The surface property, fusion bondability, and recoverability of the conditioned molded article of expanded beads were evaluated, and the lowest molding pressure among the molding pressures at which the molded articles passed all of the evaluation criteria described later (that is, the molding pressures at which compliant product could be obtain) was defined as the lower limit of the molding pressure. The number of molding pressures (that is, the number of molding conditions) at which compliant products (that is, good molded articles) could be obtained was defined as the moldable range. Tables 1 and 2 show the lower limit of the molding pressure and the moldable range of the expanded beads in the examples and comparative examples. It can be judged that the lower the lower limit of the molding pressure and the wider the moldable range, the better the moldability.

The methods for evaluating the surface property, the fusion bondability, and the recoverability in the evaluation of the lower limit of the molding pressure and the moldable range were as follows.

- Surface Property

A 100 mm × 100 mm square was drawn at the central portion of one skin surface in the thickness direction of the molded article of expanded beads, and then a diagonal line was drawn from any one corner of the square. Then, the number of voids having a size of 1 mm × 1 mm or more among the voids, that is, gaps formed between the expanded beads, existing on the diagonal line was counted. Then, in the case where the number of voids was two or less, it was judged as acceptable, and in the case where the number of voids was three or more, it was judged as unacceptable.

- Fusion Bondability

The molded article of expanded beads was broken so as to be substantially equally divided in the longitudinal direction. From among the expanded beads exposed on the fracture surface, 100 or more expanded beads were randomly extracted. Then each of the extracted expanded beads were visually observed to determine whether the expanded bead was broken inside the expanded bead (that is, the expanded beads were material-fractured) or broken at interfaces between expanded beads. Then, a value that expresses the ratio of the number of expanded beads broken inside the beads to the total number of the observed expanded beads expressed in percentage (that is, the material fracture rate) was calculated, and this value was taken as the fusion-bonding rate. Then, the case where the fusion-bonding rate was 90% or more was judged as acceptable, and the case where the fusion-bonding rate was less than 90% was judged as unacceptable.

- Recoverability

In a plan view of the molded article of expanded beads viewed from the thickness direction, the thicknesses of the molded article of expanded beads at each of 4 positions 10 mm inward from the respective vertices in the center direction and the thickness of the molded article of expanded beads at the central portion were measured. Next, the ratio (unit: %) of the thickness of the thinnest portion to the thickness of the thickest portion among the measured portions was calculated. Then, the case where the thickness ratio thus obtained was 95% or more was judged as acceptable, and the case where the thickness ratio was less than 95% was judged as unacceptable.

< Hydrofluoroolefin Amount Contained in Expanded Beads>

About 0.5 mg of expanded beads that had been left to stand at normal temperature (specifically, 23°C) and normal pressure (specifically, 1 atm) for 3 days from immediately after the production were put in a vial. The hydrofluoroolefin in the expanded beads was vaporized by heating the vial to 170°C. Then, the gas containing the hydrofluoroolefin in the vial was introduced into a gas chromatograph mass spectrometer (GCMS-QP2010 manufactured by Shimadzu Corporation), and mass spectrometry was performed to determine the amount of the hydrofluoroolefin contained in the expanded beads. In the measurement, a calibration curve prepared in advance using a sample containing a known amount of the hydrofluoroolefin was used. CP-PoraPLOT.Q manufactured by Varian, Inc. was used as a column. The amounts of the hydrofluoroolefin contained in the expanded beads in the examples and comparative examples are shown in the "HFO amount" columns of Tables 1 and 2.

<Density of Molded Article>

The density (unit: $kg/m^3$) of the molded article of expanded beads obtained by in-mold molding at the lower limit of the molding pressure described above was calculated by dividing the mass (unit: g) of the molded article by the volume (unit: L) determined from the outer dimensions of the molded article and then subjecting the result to unit conversion. Tables 1 and 2 show the molded article densities of the molded articles of expanded beads in the examples and comparative examples.

<Compression Characteristics>

A rectangular parallelepiped test piece having dimensions of 50 mm length, 50 mm width, and 25 mm of thickness was collected from the central portion of the molded article of expanded beads obtained by the in-mold molding at the lower limit of the molding pressure so as not to include the skin surface, that is, the surface that had been in contact with the inner surface of the mold during the in-mold molding. A compression test of the test piece was performed on the basis of the method specified in JIS K 6767:1999, and a stress-strain curve was obtained. Then, a 5% deformation compressive stress $\sigma_5$ (unit: kPa), a 50% deformation compressive stress $\sigma_{50}$ (unit: kPa), and a 70% deformation compressive stress $\sigma_{70}$ (unit: kPa) of the test piece (that is, the molded article of expanded beads) were calculated on the basis of the stress-strain curve. The compression test was performed in a laboratory at 23°C, and the compression speed was set to 10 mm/min. The compressive stress is an index of the rigidity of the molded article, and for example, a molded article having a high 50% deformation compressive stress $\sigma_{50}$ is excellent in rigidity.

Fig. 2 shows an example of the stress-strain curve. In addition, Tables 1 and 2 show the 50% deformation compressive stress $\sigma_{50}$ and the ratio $\sigma_{70}/\sigma_5$ of the 70% deformation compressive stress $\sigma_{70}$ to the 5% deformation compressive stress $\sigma_5$ of the molded articles of expanded beads of the examples and comparative examples calculated on the basis of the stress-strain curve.

As the value of the stress ratio $\sigma_{70}/\sigma_5$ is smaller, the difference between the stress required for deformation of the molded article of expanded beads when the strain applied to the molded article of expanded beads is small and the stress required for deformation of the molded article of expanded beads when the strain applied to the molded article of expanded beads is large is smaller, and thus the energy absorbing performance is excellent. Therefore, a molded article of expanded beads having a small value of the stress ratio $\sigma_{70}/\sigma_5$ is suitable for use as, for example, an impact absorbing material or the like. Since the value of the stress ratio $\sigma_{70}/\sigma_5$ is also affected by the density of the molded article, in the comparative examples of Table 1, the values of the stress ratio $\sigma_{70}/\sigma_5$ are listed only for Comparative Examples 1, 3, and 4 in which the densities of the molded articles are approximately the same as those in Examples 1 to 3, and "-" is listed in the sections of the stress ratio $\sigma_{70}/\sigma_5$ of the comparative examples other than these.

[Table 1]

(Table 1)

| | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|
| Resin particle | Base resin | - | rPP | rPP | rPP | rPP | rPP | rPP | rPP | rPP | rPP |
| | Addition amount of cell nucleating agent | ppm by mass | 1000 | 1000 | 1000 | 1000 | 1000 | 1000 | 1000 | 1000 | 1000 |
| | Mass | mg | 1.0 | 1.0 | 1.0 | 1.0 | 1.0 | 1.0 | 1.0 | 1.0 | 1.0 |
| Physical blowing agent | Blowing agent | - | HCFO1 | HCFO2 | HFO1 | HCFO1 | $CO_2$ | $N_2$ | $CO_2$ | $N_2$ | HCFO1 |
| | Addition amount | Part by mass | 15 | 15 | 15 | 24 | - | - | - | - | 8 |
| Expanding condition | Pressure inside container | MPa(G) | 1.5 | 1.4 | 2.9 | 1.8 | 4.0 | 4.0 | 1.5 | 4.0 | 1.0 |
| | Expanding temperature | °C | 144.5 | 145.0 | 147.5 | 141.0 | 147.0 | 153.0 | 150.5 | 153.0 | 147.0 |
| | Second expanding step | - | Not performed | Not performed | Not performed | Not performed | Not performed | Not performed | Performed | Performed | Not performed |
| Expanded bead | Heat of high temperature peak | J/g | 16 | 16 | 16 | 16 | 16 | 16 | 16 | 16 | 16 |
| | Apparent density | kg/m$^3$ | 41 | 40 | 39 | 32 | 46 | 103 | 41 | 41 | 104 |
| | Bulk density | kg/m$^3$ | 26 | 25 | 24 | 20 | 29 | 64 | 26 | 26 | 65 |
| | Bulk ratio | - | 35 | 36 | 37 | 45 | 31 | 14 | 35 | 35 | 14 |
| | Closed cell content | % | 95 | 95 | 95 | 95 | 95 | 95 | 95 | 95 | 95 |
| | Average cell diameter | μm | 118 | 112 | 105 | 113 | 88 | 75 | 131 | 102 | 135 |

|  |  |  | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|
|  | Average value of short diameters | mm | 3.0 | 3.1 | 3.2 | 3.6 | 3.1 | 2.6 | 3.0 | 3.2 | 2.7 |
|  | Coefficient of variation of short diameters | % | 8.9 | 9.2 | 6.9 | 8.1 | 8.7 | 9.5 | 13.2 | 15.8 | 13.4 |
|  | Shrinkage ratio | % | 0 | 0 | 0 | 0 | 6 | 0 | 0 | 0 | 0 |
|  | HFO amount | Mass% | 0 | 0 | 0 | 0 | 0 | 0 | 0 | 0 | 0 |
|  | Lower limit of molding pressure | MPa (G) | 0.18 | 0.18 | 0.18 | 0.18 | 0.18 | 0.28 | 0.20 | 0.20 | 0.28 |
|  | Moldable range | - | 6 | 6 | 5 | 4 | 5 | 4 | 4 | 3 | 5 |
| Molding condition | Internal pressure of beads | MPa (G) | 0.10 | 0.10 | 0.10 | 0.10 | 0.10 | - | 0.10 | 0.10 | - |
|  | Cracking amount | % | 10 | 10 | 10 | 10 | 10 | 10 | 10 | 10 | 10 |
|  | Molding pressure | MPa (G) | 0.18 | 0.18 | 0.18 | 0.18 | 0.18 | 0.28 | 0.20 | 0.20 | 0.28 |
| Molded article | Density of molded article | kg/m$^3$ | 29 | 28 | 27 | 22 | 32 | 71 | 29 | 29 | 72 |
|  | 50% compressive stress $\sigma_{50}$ | kPa | 214 | 203 | 209 | 173 | 237 | 637 | 213 | 215 | 650 |
|  | $\sigma_{70}/\sigma_5$ | - | 3.9 | 3.7 | 4.0 | 5.0 | 3.7 | - | 5.7 | 6.3 | - |

EP 4 506 400 B1

[Table 2]

<u>(Table 2)</u>

| | | | Example 5 | Comparative Example 6 | Example 6 |
|---|---|---|---|---|---|
| Resin particle | Base resin | - | PE | PE | hPP |
| | Addition amount of cell nucleating agent | ppm by mass | 200 | 200 | 1000 |
| | Mass | mg | 1.5 | 1.5 | 1.0 |
| Physical blowing agent | Blowing agent | - | HCFO1 | $CO_2$ | HFO1 |
| | Addition amount | Part by mass | 18 | - | 16 |
| Expanding condition | Pressure inside container | MPa (G) | 1.1 | 4.0 | 2.6 |
| | Expanding temperature | °C | 120.5 | 123.0 | 167.0 |
| | Second expanding step | - | Not performed | Performed | Not performed |
| Expanded bead | Heat of high temperature peak | J/g | 25 | 25 | 25 |
| | Apparent density | kg/m$^3$ | 74 | 74 | 36 |
| | Bulk density | kg/m$^3$ | 46 | 46 | 22 |
| | Bulk ratio | - | 20 | 20 | 41 |
| | Closed cell content | % | 94 | 94 | 92 |
| | Average cell diameter | $\mu$m | 104 | 109 | - |
| | Average value of short diameters | mm | 2.8 | 2.9 | 3.7 |
| | Coefficient of variation of short diameters | % | 7.0 | 14.6 | 7.8 |
| | Shrinkage ratio | % | 0 | 0 | 0 |
| | HFO amount | Mass% | 0 | 0 | 0 |
| | Lower limit of molding pressure | MPa (G) | 0.11 | 0.11 | 0.38 |
| | Moldable range | - | 3 | 1 | 3 |
| Molding condition | Internal pressure of beads | MPa (G) | - | - | 0.10 |
| | Cracking amount | % | 10 | 10 | 10 |
| | Molding pressure | MPa (G) | 0.11 | 0.11 | 0.38 |
| Molded article | Density of molded article | kg/m$^3$ | 54 | 54 | 27 |
| | 50% compressive stress $\sigma_{50}$ | kPa | 278 | 272 | 222 |
| | $\sigma_{70}/\sigma_5$ | - | 4.5 | 7.0 | 2.1 |

As shown in Table 1, the expanded beads of Examples 1 to 5 were prepared by expanding the resin particles to the specific range of apparent density in one step using the hydrofluoroolefin as the physical blowing agent. Therefore, in spite of low apparent densities, shrinkage after expansion in the expanded beads of Examples 1 to 5 could be curtailed. The expanded beads of Examples 1 to 5 had small lower limits of the molding pressure, could be molded in a wide molding pressure range from a low pressure to a high pressure, and had good moldability. Furthermore, since the expanded beads of Examples 1 to 5 had small coefficients of variation of the short diameters and small variations in particle diameter. Hence, in-mold molding of these expanded beads makes it possible to obtain molded articles of expanded beads in which the values of the stress ratio $\sigma_{70}/\sigma_5$ at a predetermined density is less likely to increase, and energy absorption performance is excellent. Among these examples, the expanded beads of Examples 1 to 4 are more excellent in moldability.

The expanded beads produced using the hydrochlorofluoroolefin as in Examples 1 and 2 had wider moldable ranges than the expanded beads of Example 3 that were produced with the hydrofluoroolefin having no chlorine atom in the molecular structure and had a similar apparent density, and than the expanded beads that were produced with carbon dioxide and had a similar apparent density.

On the other hand, the expanded beads of Comparative Example 1 were prepared by expanding the resin particles to the specific range of apparent density in one step using carbon dioxide as the physical blowing agent. Therefore, the expanded beads immediately after production were significantly shrunk.

As for the expanded beads of Comparative Example 2, the resin particles could not be expanded to the specific range of apparent density in one step because nitrogen was used as the physical blowing agent. The expanded beads of Comparative Example 2 had a large lower limit of the molding pressure and poor moldability.

The expanded beads of Comparative Examples 3 and 4 were prepared by the two-step expanding method in which the resin particles were expanded by the direct expanding method using carbon dioxide or nitrogen as the physical blowing agent to obtain first-step expanded beads, and then the first-step expanded beads were further expanded by applying an internal pressure to the first-step expanded beads and heating the first-step expanded beads. Therefore, the expanded beads of Comparative Examples 3 and 4 had larger coefficients of variation of the short diameters and larger variations in particle diameter than the expanded beads of Examples 1 to 5. As a result, the molded articles of expanded beads obtained by in-mold molding of the expanded beads of Comparative Examples 3 and 4 had large stress ratios $\sigma_{70}/\sigma_5$ and inferior energy absorption performance as compared with Example 1 having the same molded article density. In addition, the expanded beads of Comparative Examples 3 and 4 were high in lower limits of the molding pressure and was inferior in moldability, which may be because the expanded beads were heated during second-step expansion.

As for the expanded beads of Comparative Example 5, the resin particles could not be expanded to the apparent density in the specific range in one step because the amount of the hydrofluoroolefin used in the expanding step was small. The expanded beads of Comparative Example 5 had a large lower limit of the molding pressure and poor moldability.

Further, as shown in Table 2, it was confirmed that the above effect was sufficiently exhibited even when the polyethylene-based resin or the propylene homopolymer was used as the base resin.

Although the specific aspects of the polyolefin-based resin expanded beads and the method for producing the same according to the present invention have been described above on the basis of the examples, the polyolefin-based resin expanded beads and the method for producing the same according to the present invention are not limited to the aspects of the examples, and the configuration can be appropriately changed as long as the gist of the present invention is not impaired.

## Claims

1. A method for producing polyolefin-based resin expanded beads, comprising:

   a dispersing step of dispersing polyolefin-based resin particles in an aqueous medium;
   a blowing agent adding step of adding a physical blowing agent into a sealed container; and
   an expanding step of expanding the polyolefin-based resin particles by impregnating the polyolefin-based resin particles with the physical blowing agent in the sealed container, then releasing the polyolefin-based resin particles from the sealed container together with the aqueous medium to thereby produce polyolefin-based resin expanded beads having an apparent density of 10 kg/m$^3$ or more and 80 kg/m$^3$ or less, as measured according to the method in the description,
   wherein the physical blowing agent contains hydrofluoroolefin, and an addition amount of the hydrofluoroolefin in the blowing agent adding step is 10 parts by mass or more and 30 parts by mass or less with respect to 100 parts by mass of the polyolefin-based resin particles.

2. The method for producing polyolefin-based resin expanded beads according to claim 1, wherein the hydrofluoroolefin has a carbon skeleton a carbon number of which is three or more and five or less.

3. The method for producing polyolefin-based resin expanded beads according to claim 1 or 2, wherein the hydrofluoroolefin contains a chlorine atom(s) in a molecular structure thereof.

4. The method for producing polyolefin-based resin expanded beads according to any one of claims 1 to 3, wherein the hydrofluoroolefin is one or more compounds selected from the group consisting of 1-chloro-3,3,3-trifluoropropene and 1-chloro-2,3,3,3-tetrafluoropropene.

5. The method for producing polyolefin-based resin expanded beads according to any one of claims 1 to 4, wherein polyolefin-based resin expanded beads having an apparent density of 10 kg/m$^3$ or more and 50 kg/m$^3$ or less are produced.

6. The method for producing polyolefin-based resin expanded beads according to any one of claims 1 to 5, wherein the polyolefin-based resin expanded beads have a shrinkage ratio of 5% or less, as measured according to the method in the description.

7. Polyolefin-based resin expanded beads obtained by expanding polyolefin-based resin particles using a physical blowing agent,

wherein the physical blowing agent contains hydrofluoroolefin,
an apparent density of the polyolefin-based resin expanded beads is 10 kg/m$^3$ or more and 80 kg/m$^3$ or less, and
the polyolefin-based resin expanded beads have an average short diameter of 1.0 mm or more and 5.0 mm or less and a coefficient of variation of a short diameter of 10% or less, the apparent density, the average short diameter and the coefficient of variation of a short diameter being as measured according to the method **in** the description.

8. The polyolefin-based resin expanded beads according to claim 7, wherein an amount of the hydrofluoroolefin contained in each polyolefin-based resin expanded bead is 1 mass% or less (including 0 mass%), as measured according to the method in the description.

9. The polyolefin-based resin expanded beads according to claim 7 or 8, wherein the hydrofluoroolefin has a carbon skeleton a carbon number of which is three or more and five or less.

10. The polyolefin-based resin expanded beads according to any one of claims 7 to 9, wherein the hydrofluoroolefin contains a chlorine atom(s) in a molecular structure thereof.

11. The polyolefin-based resin expanded beads according to any one of claims 7 to 10, wherein the hydrofluoroolefin is one or more compounds selected from the group consisting of 1-chloro-3,3,3-trifluoropropene and 1-chloro-2,3,3,3-tetrafluoropropene.

**Patentansprüche**

1. Verfahren zum Herstellen Polyolefin-basierter geschäumter Harzkügelchen, mit:

einem Dispersionsschritt des Dispergierens Polyolefin-basierter Harzpartikel in einem wässrigen Medium;
einem Treibmittelhinzufügungsschritt des Hinzufügens eines physikalischen Treibmittels in einen abgedichteten Behälter; und
einem Aufschäumschritt des Aufschäumens der Polyolefin-basierten Harzpartikel durch Tränken der Polyolefin-basierten Harzpartikel mit dem physikalischen Treibmittel in dem abgedichteten Behälter, dann Ablassen der Polyolefin-basierten Harzpartikel aus dem abgedichteten Behälter zusammen mit dem wässrigen Medium, um dadurch Polyolefinbasierte geschäumte Harzkügelchen herzustellen, die eine Fülldichte von 10 kg/m$^3$ oder mehr und 80 kg/m$^3$ oder weniger aufweisen, die entsprechend des Verfahrens in der Beschreibung gemessen wird, bei dem das physikalische Treibmittel Hydrofluoroolefin enthält, und
eine Zusatzmenge des Hydrofluoroolefins in dem Treibmittelhinzufügungsschritt 10 Massenteile oder mehr und 30 Massenteile oder weniger in Bezug auf 100 Massenteile der Polyolefin-basierten Harzpartikel ist.

2. Verfahren zum Herstellen Polyolefin-basierter geschäumter Harzkügelchen nach Anspruch 1, bei dem das Hydrofluoroolefin ein Kohlenstoffgerüst aufweist, dessen Kohlenstoffanzahl drei oder mehr und fünf oder weniger ist.

3. Verfahren zum Herstellen Polyolefin-basierter geschäumter Harzkügelchen nach Anspruch 1 oder 2, bei dem das Hydrofluoroolefin ein Chloratom/Chloratome in einer molekularen Struktur desselben enthält.

4. Verfahren zum Herstellen Polyolefin-basierter geschäumter Harzkügelchen nach einem der Ansprüche 1 bis 3, bei dem das Hydrofluoroolefin eine oder mehrere Verbindung/en ist/sind, die aus der Gruppe ausgewählt ist/sind, die aus 1-Chloro-3,3,3-Trifluoropropen und 1-Chloro-2,3,3,3-Tetrafluoropropen besteht.

5. Verfahren zum Herstellen Polyolefin-basierter geschäumter Harzkügelchen nach einem der Ansprüche 1 bis 4, bei dem Polyolefin-basierte geschäumte Harzkügelchen hergestellt werden, die eine Fülldichte von 10 kg/m$^3$ oder mehr und 50 kg/m$^3$ oder weniger aufweisen.

6. Verfahren zum Herstellen Polyolefin-basierter geschäumter Harzkügelchen nach einem der Ansprüche 1 bis 5, bei dem die Polyolefin-basierten geschäumten Harzkügelchen ein Schrumpfverhältnis von 5% oder weniger aufweisen, das entsprechend des Verfahrens in der Beschreibung gemessen wird.

7. Polyolefin-basierte geschäumte Harzkügelchen, die durch Schäumen Polyolefin-basierter Harzpartikel unter Verwendung eines physikalischen Treibmittels erlangt sind,

   bei dem das physikalische Treibmittel Hydrofluoroolefin enthält,
   eine Fülldichte der Polyolefin-basierten geschäumten Harzkügelchen 10 kg/m$^3$ oder mehr und 80 kg/m$^3$ oder weniger ist, und
   die Polyolefin-basierten geschäumten Harzkügelchen einen durchschnittlichen kurzen Durchmesser von 1,0 mm oder mehr und 5,0 mm oder weniger und einen Schwankungskoeffizienten eines kurzen Durchmessers von 10% oder weniger aufweisen, welche Fülldichte, welcher durchschnittliche kurze Durchmesser und welcher Schwankungskoeffizient eines kurzen Durchmessers entsprechend des Verfahrens in der Beschreibung gemessen sind.

8. Polyolefin-basierte geschäumte Harzkügelchen nach Anspruch 7, bei denen eine Menge des Hydrofluoroolefins, die in jedem Polyolefin-basierten geschäumten Harzkügelchen enthalten ist, 1 Massen% oder weniger (inklusive 0 Massen%) ist, die entsprechend des Verfahrens in der Beschreibung gemessen ist.

9. Polyolefin-basierte geschäumte Harzkügelchen nach Anspruch 7 oder 8, bei denen das Hydrofuoroolefin ein Kohlenstoffgerüst aufweist, dessen Kohlenstoffanzahl drei oder mehr und fünf oder weniger ist.

10. Polyolefin-basierte geschäumte Harzkügelchen nach einem der Ansprüche 7 bis 9, bei denen das Hydrofluoroolefin ein Chloratom/Chloratome in einer molekularen Struktur desselben enthält.

11. Polyolefin-basierte geschäumte Harzkügelchen nach einem der Ansprüche 7 bis 10, bei denen das Hydrofluoroolefin eine oder mehrere Verbindung/en ist/sind, die aus der Gruppe ausgewählt ist/sind, die aus 1-Chloro-3,3,3-Trifluoropropen und 1-Chloro-2,3,3,3-Tetrafluoropropen besteht.

**Revendications**

1. Procédé de fabrication de billes expansées de résine à base de polyoléfine, comprenant :

   une étape de dispersion consistant à disperser des particules de résine à base de polyoléfine dans un milieu aqueux ;
   une étape d'ajout d'un agent gonflant consistant à ajouter un agent gonflant physique dans un récipient étanche ; et
   une étape d'expansion consistant à expanser les particules de résine à base de polyoléfine en imprégnant les particules de résine à base de polyoléfine avec l'agent gonflant physique dans le récipient étanche, puis en libérant les particules de résine à base de polyoléfine du récipient étanche avec le milieu aqueux afin de produire ainsi des billes expansées de résine à base de polyoléfine ayant une densité apparente de 10 kg/m$^3$ ou plus et de 80 kg/m$^3$ ou moins, telle que mesurée selon le procédé décrit dans la description, dans lequel l'agent gonflant physique contient de l'hydrofluoro-oléfine, et une quantité d'ajout d'hydrofluoro-oléfine dans l'étape d'ajout d'agent gonflant est de 10 parties en masse ou plus et de 30 parties en masse ou moins par rapport à 100 parties en masse des particules de résine à base de polyoléfine.

2. Procédé de production de billes expansées de résine à base de polyoléfine selon la revendication 1, dans lequel l'hydrofluoro-oléfine a une chaine carbonée dont le nombre d'atomes de carbone est de trois ou plus et de cinq ou moins.

3. Procédé de production de billes expansées de résine à base de polyoléfine selon la revendication 1 ou 2, dans lequel l'hydrofluoro-oléfine contient un ou plusieurs atomes de chlore dans sa structure moléculaire.

4. Procédé de production de billes expansées de résine à base de polyoléfine selon l'une quelconque des revendications 1 à 3, dans lequel l'hydrofluoro-oléfine est un ou plusieurs composés choisis dans le groupe constitué du 1-chloro-3,3,3-trifluoropropène et le 1-chloro-2,3,3,3-tétrafluoropropène.

5. Procédé de production de billes expansées de résine à base de polyoléfine selon l'une quelconque des revendications 1 à 4, dans lequel des billes expansées de résine à base de polyoléfine ayant une densité apparente de 10 kg/m$^3$ ou plus et de 50 kg/m$^3$ ou moins sont produits.

6. Procédé de production de billes expansées de résine à base de polyoléfine selon l'une quelconque des revendications 1 à 5, dans lequel les billes expansées de résine à base de polyoléfine ont un taux de retrait de 5 % ou moins, mesuré selon le procédé décrit dans la description.

7. Billes expansées de résine à base de polyoléfine obtenues par expansion de particules de résine à base de polyoléfine à l'aide d'un agent gonflant physique,

dans lequel l'agent gonflant physique contient de l'hydrofluoro-oléfine,
une densité apparente des billes expansées de résine à base de polyoléfine est de 10 kg/m$^3$ ou plus et de 80 kg/m$^3$ ou moins, et
les billes expansées de résine à base de polyoléfine ont un diamètre court moyen de 1,0 mm ou plus et de 5,0 mm ou moins et un coefficient de variation du diamètre court de 10 % ou moins, la densité apparente, le diamètre court moyen et le coefficient de variation du diamètre court étant mesurés selon le procédé décrit dans la description.

8. Billes expansées de résine à base de polyoléfine selon la revendication 7, dans lequel une quantité d'hydrofluoro-oléfine contenue dans chaque bille expansée de résine à base de polyoléfine est de 1 % en masse ou moins (y compris 0 % en masse), telle que mesurée selon le procédé décrit dans la description.

9. Billes expansées de résine à base de polyoléfine selon la revendication 7 ou 8, dans lequel l'hydrofluoro-oléfine a une chaine carbonée dont le nombre d'atomes de carbone est de trois ou plus et de cinq ou moins.

10. Billes expansées de résine à base de polyoléfine selon l'une quelconque des revendications 7 à 9, dans dans lequel l'hydrofluoro-oléfine contient un ou plusieurs atomes de chlore dans sa structure moléculaire.

11. Billes expansées de résine à base de polyoléfine selon l'une quelconque des revendications 7 à 10, dans lequel l'hydrofluoro-oléfine est un ou plusieurs composés choisis dans le groupe constitué du 1-chloro-3,3,3-trifluoropropène et le 1-chloro-2,3,3,3-tétrafluoropropène.

FIG. 1

FIG. 2

**EP 4 506 400 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019172204 A
- US 2017275434 A1
- WO 2013031745 A1
- WO 2009054212 A1
- US 2002143076 A1